# NEUE EUROPÄISCHE PATENTSCHRIFT

(11) **EP 2 760 665 B2**
(45) Veröffentlichungstag und Bekanntmachung des Hinweises auf die Entscheidung über den Einspruch: **15.06.2022**
(45) Hinweis auf die Patenterteilung: 25.07.2018
(21) Anmeldenummer: 12768761.4
(22) Anmeldetag: 20.09.2012
(51) Int. Cl.: B32B 17/10

(54) **BRANDSCHUTZELEMENT MIT SCHUTZBESCHICHTUNG UND DESSEN HERSTELLUNGSVERFAHREN**
FIRE PROTECTION ELEMENT WITH PROTECTIVE COATING, AND METHOD FOR PRODUCING THE SAME
ÉLÉMENT IGNIFUGE À REVÊTEMENT PROTECTEUR ET SON PROCÉDÉ DE FABRICATION

(30) Priorität: 26.09.2011 DE 102011083384; 20.01.2012 DE 102012200799
(43) Veröffentlichungstag der Anmeldung: 06.08.2014
(73) Patentinhaber: INTERPANE Entwicklungs-und Beratungsgesellschaft mbH, 37697 Lauenförde (DE)
(72) Erfinder: FELDHEGE, Martin, 66740 Saarlouis (DE); MATHIEU, Eric, F-57200 Saarguemines (FR); HERLITZE, Lothar, 37691 Derental (DE); LANDGRAF, Ralf, 94579 Zenting (DE)
(74) Vertreter: Körfer, Thomas
(86) Internationale Anmeldenummer: PCT/EP2012/068507
(87) Internationale Veröffentlichungsnummer: WO 2013/045335

(56) Entgegenhaltungen:
- EP-A1- 1 961 555
- WO-A1-00/37383
- WO-A1-2006/097513
- WO-A1-2006/108873
- WO-A1-2012/006748
- US-A- 3 974 316
- US-A1- 2007 011 988
- GORDON R: "Chemical vapor deposition of coatings on glass", JOURNAL OF NON-CRYSTALLINE SOLIDS, NORTH-HOLLAND PHYSICS PUBLISHING. AMSTERDAM, NL, Bd. 218, 1. September 1997 (1997-09-01), Seiten 81-91, XP004095557, ISSN: 0022-3093, DOI: 10.1016/S0022-3093(97)00198-1

## Beschreibung

Die Erfindung betrifft ein Brandschutzelement mit mindestens einem transparenten Trägerelement und einem Brandschutzmittel, das auf mindestens einer Oberfläche des Trägerelements angeordnet ist, sowie ein Verfahren zu dessen Herstellung.

Brandschutzgläser bestehen in der Regel aus speziell gehärteten Glasscheiben. Um hohe Widerstandszeiten gegenüber einem Feuer zu realisieren und gleichzeitig eine Temperaturabsenkung und Wärmestrahlungsreduzierung auf der dem Feuer abgewandten Seite zu erzeugen, werden Verbundwerkstoffe aus mehreren Glasscheiben mit dazwischen befindlichen Brandschutzmitteln hergestellt. Unter Hitzeeinwirkung verdampft das im Brandschutzmittel enthaltene Wasser, schäumt die verbleibende Substanz auf und stellt für eine bestimmte Zeitdauer einen effektiven Schutz gegen unerwünschte Hitzeübertragung dar. Das Brandschutzglas wird meist wie ein Isolierglas mit einer Primär- und Sekundärdichtung an den Kanten verschlossen.

In der WO 94/04355 A1 wird beispielsweise ein Brandschutzelement beschrieben, dass aus mindestens zwei planparallelen Glasscheiben besteht, wobei der Zwischenraum mit einem als gießbares Gel vorliegenden Brandschutzmittel gefüllt ist. Um die Hitzebeständigkeit weiter zu erhöhen, werden drei oder mehr Glasscheiben voneinander beabstandet angeordnet und jeweils zwischen zwei Glasflächen eine Schicht aus Brandschutzgel eingebracht. Das Brandschutzgel enthält Polysilikate, die aus einer Mischung aus Alkalisilikat und Alkalimetalloxid gebildet werden.

Die EP 2 329 948 A1 beschreibt ein Brandschutzgel das insbesondere durch Vergießen und ohne Trocknung herstellbar ist. Das Brandschutzgel enthält als Hauptkomponente eine Alkalisilikatlösung, die durch Zugabe von Säure, zum Beispiel Kieselsäure KOH, aushärtet. Das Brandschutzgel kann auch auf einer Folie vorliegen, die zwischen die Glasscheiben laminiert wird.

Die US 3,974,316 A beschreibt Feuerschutzverglasungen mit mindestens zwei Scheiben. Eine dazwischenliegende Schicht weist ein Material auf, das unter Hitzeeinwirkung einen thermisch isolierenden Körper ausbildet. Eine Schutzbeschichtung ist derart auf die Scheibe aufgebracht, dass eine Wechselwirkung zwischen dem Material der Zwischenschicht und der Scheibe unterdrückt wird, um so die Transparenz der Scheibe zu erhalten.

WO 2006/108873 A1 offenbart Feuerschutzverglasungen mit einer Schicht aus hydriertem alkalisilikatbasierten Material zwischen zwei Glasscheiben. Zusätzlich ist ein UV-Filter zwischen den Glasscheiben vorgesehen. Der UV-Filter auf Basis von Zinkoxid ist anfällig für Korrosion durch die Alkalisilikatschicht. Daher wird zusätzlich eine Schutzschicht zwischen dem UV-Filter und der Alkalisilikatschicht vorgesehen. Diese kann auf Basis von Zinnoxid, Oxid, Nitrid oder Oxynitrid von Aluminium, Titan oder Zirkonium, oder auch bestimmten Kunststoffen vorgesehen sein.

R. Gordon, "Chemical vapor deposition of coatings on glass", Journal of Non-Crystalline Solids 218 (1997), S. 81-91 beschreibt Verfahren zur chemischen Gasphasenabscheidung von Beschichtungen auf Glas. Eine Vielzahl möglicher Beschichtungsmaterialien wird diskutiert, darunter Siliziumoxide, Aluminiumoxide, Titanoxide, Zinkoxide, Zinnoxide, Titannitride.

Die WO 2006/097513 A1 beschreibt Low-E Verglasungen. Zwischen einer im infraroten reflektierenden Metallschicht und einer Glasscheibe befindet sich eine dielektrische Schicht. Auf der reflektierenden Metallschicht befinden sich eine Barriereschicht und weitere dielektrische Schichten. Die Barriereschicht kann durch ein Metall gebildet sein, bspw. ein Zinkoxid.

Die EP 1 961 555 A1 beschreibt eine Brandschutzverglasung mit zwei Scheiben, wobei auf einer der Scheiben eine Silberbeschichtung vorgesehen ist. Die Silberbeschichtung weist eine dielektrische Schicht auf, die ein oxidisches Gemisch aus Zink und Zinn zu etwa gleichen Anteilen (nach Anzahlen der Atome) aufweist. Bei einer Dreifachverglasung ist in einem separaten Zwischenraum zwischen zwei Scheiben eine Brandschutzschicht vorgesehen.

Es zeigt sich leider, dass diese Brandschutzmittel während des Herstellungsprozesses, aber auch anschließend einen großflächigen oder lokalen Angriff der Glasoberfläche herbeiführen können. Dies äußert sich in dem Auftreten von Eintrübungen, die die Transparenz und das optische Erscheinungsbild beeinträchtigen.

Die Aufgabe der vorliegenden Erfindung ist es, ein Brandschutzelement und dessen Herstellungsverfahren zu schaffen, das sich zur Herstellung von Brandschutzglas eignet und weder während des Herstellungsprozesses noch anschließend Eintrübungen ausbildet.

Die Aufgabe wird durch das erfindungsgemäße Brandschutzelement gemäß Anspruch 1 und das erfindungsgemäße Verfahren zur Herstellung eines Brandschutzelements gemäß Anspruch 6 gelöst. In den Unteransprüchen sind vorteilhafte Weiterbildungen des erfindungsgemäßen Brandschutzelements beziehungsweise Verfahrens dargestellt.

Das erfindungsgemäße Brandschutzelement umfasst mindestens ein transparentes Trägerelement und ein Brandschutzmittel, das auf mindestens einer Oberfläche des Trägerelements angeordnet ist. Dabei weist die dem Brandschutzmittel zugewandte Oberfläche des Trägerelements eine Eintrübungsreduzierende Schutzbeschichtung auf. Diese Schutzbeschichtung verhindert insbesondere eine Diffusion von Alkaliionen, insbesondere Natriumionen, aus dem Trägerelement in Richtung Brandschutzmittel. Die Alkaliionen lagern sich zum Beispiel als Natriumhydroxid an der dem Brandschutzmittel zugewandten Oberfläche des Trägerelements ab und führen zu Eintrübungen und stören das transparente Erscheinungsbild des Brandschutzelements. Besonders vorteilhaft enthält die Schutzbeschichtung Siliciumoxid.

Das Siliciumoxid nimmt die störenden Alkaliionen auf und lagert diese in ihre Kristallstruktur ein. Somit wird die Diffusion der Alkaliionen wirkungsvoll reduziert oder auch vollständig abgestellt, sodass sich in Folge keine Ablagerungerungen bilden können.
Vorteilhafterweise besitzt die Schutzschicht eine Dicke von 20nm bis 100nm, bevorzugt eine Dicke von 40nm bis 50nm. Eine Schutzschicht dieser Dicke erniedrigt die Diffusion von Alkaliionen im ausreichenden Maße, um Ablagerungen zu verhindern, bei einer Prozess-technisch optimierten Beschichtungsdauer und mit reduziertem Materialbedarf.
Es ist des Weiteren vorteilhaft, wenn die Schutzbeschichtung eine Sauerstoffsättigung oder einen Sauerstoffüberschuss aufweist.
Vorteilhafterweise ist das Trägerelement als Floatglasscheibe ausgebildet, bei der mindestens die einer Zinnseite gegenüberliegende Oberfläche der Floatglasscheibe mit der Schutzbeschichtung beschichtet ist. Bei der Floatglasherstellung wird eine flüssige Glasschmelze fortlaufend auf ein längliches Bad aus flüssigem Zinn geleitet, auf welchem das leichtere Glas schwimmt und sich wie ein Film gleichmäßig ausbreitet. Die im Zinnbad schwimmende Oberfläche der Floatglasscheibe wird geläufig als Zinnseite bezeichnet. Diese Oberfläche ist gering mit Zinn dotiert und weist eine geringere Natriumdiffusion als die gegenüberliegende Oberfläche auf. Die Diffusion von Störionen durch die Zinn-seitige Oberfläche der Floatglasscheibe kann bereits so gering sein, dass es nicht zu einer Eintrübung kommt. Wird ein solches Trägerelement zum Beispiel als mittlere Scheibe eines dreischeibigen Brandschutzglases verwendet, muss somit mindestens die der Zinnseite gegenüberliegende Oberfläche mit der Schutzbeschichtung versehen sein, um eine Eintrübung des Brandschutzglases zu vermeiden. Um die Wahrscheinlichkeit einer Eintrübung weiter zu senken, kann auch auf die Zinnseitige Oberfläche der Floatglasscheibe eine Schutzbeschichtung aufgebracht sein.

Das erfindungsgemäße Verfahren zur Herstellung eines Brandschutzelements mit mindestens einem transparenten Trägerelement und einem Brandschutzmittel, das auf mindestens einer Oberfläche des Trägerelements angeordnet ist, weist den Verfahrensschritt auf, dass die dem Brandschutzmittel zugewandte Oberfläche des Trägerelements mit einer eine Eintrübung reduzierenden Schutzbeschichtung beschichtet wird.

Vorteilhafterweise wird die Schutzbeschichtung mit einem physikalischen Abscheidungs-Verfahren von einem keramischen oder metallischen Ausgangstoff aufgebracht. Bevorzugt wird ein Sputter-Verfahren verwendet. Solche Beschichtungen sind sehr gleichmäßig in ihrer Dicke und Zusammensetzung und liefern somit einen gleichmäßig effizienten Schutz.

Ausführungsbeispiele des erfindungsgemäßen Brandschutzelements und Brandschutzgläser, die erfindungsgemäße Brandschutzelemente aufweisen, sind in den Zeichnungen beispielhaft dargestellt und werden anhand der nachfolgenden Beschreibung näher erläutert. Es zeigen:
- Fig. 1: ein Ausführungsbeispiel eines erfindungsgemäßen Brandschutzelements in schematischer Darstellung;
- Fig. 2: ein Brandschutzglas mit zwei erfindungsgemäßen Brandschutzelementen in schematischer Seitenansicht und
- Fig. 3: ein Ausführungsbeispiel eines Dreischeibenbrandschutzglases mit einem erfindungsgemäßen Brandschutzelement in schematischer Seitenansicht.

Einander entsprechende Teile sind in allen Figuren mit den gleichen Bezugszeichen versehen.

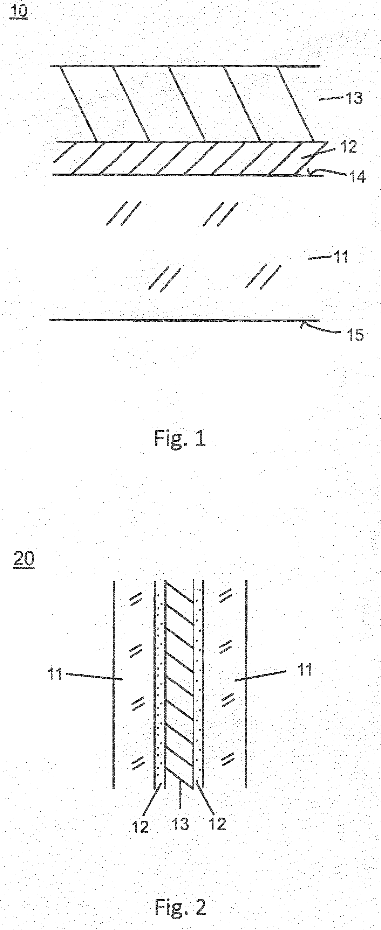

Fig. 1 zeigt ein Brandschutzelement 10 mit einem transparenten Trägerelement 11. Als Trägerelemente 11 dienen meist Glasscheiben, insbesondere Floatglasscheiben, wobei jedoch auch andere lichtdurchlässige Materialien, wie zum Beispiel hitzebeständige Kunststoffe, verwendet werden können.

Um eine Brandschutzwirkung zu erreichen, ist auf dem Trägerelement 11 ein Brandschutzmittel 13 aufgebracht, dessen Hauptbestandteil bevorzugt eine Alkalisilikatlösung ist, die durch Trocknung oder durch Zugabe von beispielsweise Säure, z. B. Kieselsäure, aushärtet. Das Brandschutzmittel kann beispielsweise durch Gießen auf das Trägerelement 11 aufgebracht sein oder auf einer transparenten Folie aufgebracht vorliegen, die auf das Trägerelement 11 laminiert wird.

Eine auf der dem Brandschutzmittel zugewandten Oberfläche des Trägerelements 11 aufgebrachte Schutzbeschichtung 12 reduziert die Ionendiffusion und verhindert ein Austreten der Ionen aus der Schutzbeschichtung 12. Als Materialien für die Schutzbeschichtung 12 eignen sich insbesondere SiOₓ. Die Schutzbeschichtung kann vorteilhafter Weise auch Hafniumoxid, oder eines oder eine Mischung aus den Materialien Vanadiumoxid oder Nioboxid, eines oder eine Mischung aus den Materialien Zinknitrid oder Zinnnitrid, Hafniumnitrid oder eines oder eine Mischung aus den Materialien Vanadiumnitrid oder Niobnitrid, enthalten. Wird als Trägerelement 11 eine Floatglasscheibe verwendet, die herstellungsbedingt eine leicht mit Zinn dotierte, sogenannte Zinn-Seite 15 aufweist, so wird mindestens die der Zinnseite gegenüberliegende Oberfläche 14 der Floatglasscheibe mit der Schutzbeschichtung versehen.

Die Schutzbeschichtung wird in einem physikalischen Abscheidungsverfahren bevorzugt mit einem Sputter-Verfahren aufgebracht. Dabei wird die Schutzbeschichtung 12 bevorzugt von einem metallischen oder keramischen Ausgangsstoff unter Zugabe von Sauerstoff für die oben genannten Oxide, unter Zugabe von Stickstoff für die oben genannten Nitride als Reaktivgas aufgebracht. Dabei wird der Reaktivgasanteil bevorzugt so gewählt, dass eine Sättigung oder ein Sauerstoff- bzw. Stickstoffüberschuss herrscht. Dies führt zu einer Schutzbeschichtung 12 mit Sauerstoff- bzw. Stickstoffsättigung oder einem Sauerstoff- bzw. Stickstoffüberschuss. Die Schutzbeschichtung weist bevorzugt eine Dicke von 20nm bis 100nm, besonders bevorzugt von 40nm bis 50nm auf.

Fig. 2 zeigt ein Brandschutzglas 20, das als Verbundglas aus zwei Trägerelementen 11 aufgebaut ist. In den Zwischenraum zwischen den einander zugewandten Oberflächen der beiden Trägerelementen 11 ist das Brandschutzmittel 13 eingebracht. Die dem Brandschutzmittel 12 zugewandten Oberflächen der Trägerelemente 11 sind jeweils mit einer Schutzbeschichtung 12 beschichtet, um eine lokale oder auch großflächige Eintrübung des Brandschutzglases 20 bei der Herstellung oder auch langfristig zu vermeiden.

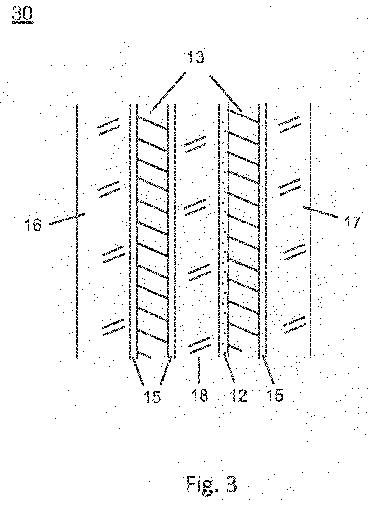

Fig. 3 zeigt ein Brandschutzglas 30, das aus zwei Floatglasscheiben 16, 17 ohne Schutzbeschichtung und einem ebenfalls als Floatglasscheibe 18 ausgebildeten Trägerelement mit Schutzbeschichtung 12 gebildet wird. Die Floatglasscheibe 18 ist zwischen den Floatglasscheiben 16, 17 und jeweils planparallel zu diesen angeordnet. Ein Brandschutzmittel 13 ist jeweils im Zwischenraum zwischen zwei einander zugewandten Oberflächen der Floatglasscheiben 16,17,18 angeordnet. Dabei ist jede Floatglasscheibe 16,17,18 so angeordnet, dass ihre zinnseitige Oberfläche 15 dem Brandschutzmittel 13 zugewandt ist.
Die Floatglasscheibe 18, deren beide Oberflächen jeweils einem Brandschutzmittel 13 zugewandt sind, weist auf der der Zinnseite 15 gegenüberliegenden Oberfläche die Schutzbeschichtung 12 auf, um eine Eintrübung des Trägerelements 18 zu vermeiden. Durch die Sn-Dotierung der Zinnseite 15 des Floatglases 16, 17, 11 wird eine Diffusion von Alkaliionen aus dem Floatglas soweit reduziert, dass dort eine Eintrübung nur mit geringer Wahrscheinlichkeit auftritt.
Um eine Eintrübung des Brandschutzglases mit noch größerer Sicherheit zu vermeiden, kann die Schutzbeschichtung (12) auch auf die zinnseitige Oberfläche eines Trägerelements aufgetragen sein.

Die Erfindung ist nicht auf die beschriebenen Ausführungsbeispiele beschränkt.

## Patentansprüche

1. Brandschutzelement (10) mit mindestens einem transparenten Trägerelement (11) und einem Brandschutzmittel (13), das auf mindestens einer Oberfläche des Trägerelements (11) angeordnet ist,
wobei die dem Brandschutzmittel (13) zugewandte Oberfläche (14) des Trägerelements (11) eine Schutzbeschichtung (12) aufweist, die eine Eintrübung des Brandschutzelements vermindert,
**dadurch gekennzeichnet,**
**dass** die Schutzbeschichtung (12) ausschließlich zumindest eines der folgenden Materialien enthält: Siliciumoxid, Hafniumoxid, Vanadiumoxid, Nioboxid, Zinknitrid, Zinnnitrid, Hafniumnitrid, Vanadiumnitrid, Niobnitrid.

2. Brandschutzelement nach Anspruch 1,
**dadurch gekennzeichnet,**
**dass** ein Hauptbestandteil des Brandschutzmittels (13) eine ausgehärtete Alkalisilikatlösung ist.

3. Brandschutzelement nach einem der Ansprüche 1 oder 2,
**dadurch gekennzeichnet,**
**dass** die Schutzbeschichtung (12) eine Dicke von 20nm bis 100nm, bevorzugt eine Dicke von 40nm bis 50nm besitzt.

4. Brandschutzelement nach einem der Ansprüche 1 bis 3,
**dadurch gekennzeichnet,**
**dass** die Schutzbeschichtung (12) eine Sauerstoffsättigung oder einen Sauerstoffüberschuss bzw. eine Stickstoffsättigung oder einen Stickstoffüberschuss aufweist.

5. Brandschutzelement nach einem der Ansprüche 1 bis 4,
**dadurch gekennzeichnet,**
**dass** das Trägerelement (11) eine Floatglasscheibe ist, deren erste Oberfläche (15) bei der Herstellung mit einem Zinn-Bad in Berührung stand, und mindestens die der ersten Oberfläche (15) gegenüberliegende Oberfläche (14) der Floatglasscheibe mit der Schutzbeschichtung (12) beschichtet ist.

6. Verfahren zur Herstellung eines Brandschutzelements (10) mit mindestens einem transparenten Trägerelement (11) und einem Brandschutzmittel (13), das auf mindestens einer Oberfläche des Trägerelements angeordnet wird,
wobei die dem Brandschutzmittel (13) zugewandte Oberfläche (14) des Trägerelements mit einer eine Eintrübung reduzierenden Schutzbeschichtung (12) beschichtet wird,
**dadurch gekennzeichnet,**
**dass** die Schutzbeschichtung (12) ausschließlich zumindest eines der folgenden Materialien enthält: Siliciumoxid, Hafniumoxid, Vanadiumoxid, Nioboxid, Zinknitrid, Zinnnitrid, Hafniumnitrid, Vanadiumnitrid, Niobnitrid.

7. Verfahren nach Anspruch 6
**dadurch gekennzeichnet,**
**dass** die Schutzbeschichtung (12) von einem metallischen oder keramischen Ausgangsstoff mit einem physikalischen Abscheidungs-Verfahren, insbesondere einem Sputter-Verfahren, aufgebracht wird.

8. Verfahren nach Anspruch 7,
**dadurch gekennzeichnet,**
**dass** Sauerstoff und/oder Stickstoff als Reaktivgas verwendet wird und der Reaktivgasanteil eine Sättigung oder einen Sauerstoff- oder Stickstoffüberschuss in der Schutzbeschichtung bewirkt.

## Claims

1. Fire protection element (10) with at least one transparent carrier element (11) and a fire protection agent (13) which is arranged on at least one surface of the carrier element (11), wherein the surface (14) of the carrier element (11) facing the fire protection agent (13) has a protective coating (12) which reduces fogging of the fire protection element,
**characterised in that**
the protective coating (12) exclusively contains at least one of the following materials:
silicon oxide, hafnium oxide, vanadium oxide, niobium oxide, zinc nitride,
tin nitride, hafnium nitride, vanadium nitride, niobium nitride.

2. Fire protection element according to claim 1,
**characterised in that**
a main constituent of the fire protection agent (13) is a cured alkali silicate solution.

3. Fire protection element according to one of claims 1 or 2,
**characterised in that**
the protective coating (12) has a thickness of 20 nm to 100 nm, preferably a thickness of 40 nm to 50 nm.

4. Fire protection element according to one of claims 1 to 3,
**characterised in that**
the protective coating (12) has an oxygen saturation or an oxygen excess or it has a nitrogen saturation or a nitrogen excess.

5. Fire protection element according to one of claims 1 to 4,
**characterised in that**
the carrier element (11) is a pane of float glass of which the first surface (15) was in contact with a tin bath during production, and at least the surface (14) of the pane of float glass facing the first surface (15) is coated with the protective coating (12).

6. Method for production of a fire protection element (10) with at least one transparent carrier element (11) and a fire protection agent (13) which is arranged on at least one surface of the carrier element, wherein the surface (14) of the carrier element facing the fire protection agent (13) is coated with a protective coating (12) which reduces fogging,
**characterised in that**
the protective coating (12) exclusively contains at least one of the following materials:
silicon oxide, hafnium oxide, vanadium oxide, niobium oxide, zinc nitride, tin nitride, hafnium nitride, vanadium nitride, niobium nitride.

7. Method according to claim 6,
**characterised in that**
the protective coating (12) is applied from a metallic or ceramic starting material with a physical deposition process, in particular a sputtering process.

8. Method according to claim 7,
**characterised in that**
oxygen and/or nitrogen is used as reactive gas and the reactive gas component causes a saturation or an oxygen excess or nitrogen excess in the protective coating.

## Revendications

1. Elément ignifuge (10) comprenant au moins un élément support transparent (11) et un agent ignifuge (13) qui est disposé sur au moins une surface de l'élément support (11), dans lequel la surface (14) de l'élément support (11), tournée vers l'agent ignifuge (13), présente un revêtement protecteur (12) qui réduit une turbidité de l'élément ignifuge,
**caractérisé**
**en ce que** le revêtement protecteur (12) contient exclusivement au moins l'un des matériaux suivants : oxyde de silicium, oxyde d'hafnium, oxyde de vanadium, oxyde de niobium, nitrure de zinc, nitrure d'étain, nitrure d'hafnium, nitrure de vanadium, nitrure de niobium.

2. Elément ignifuge selon la revendication 1,
**caractérisé**
**en ce qu'**un composant principal de l'élément ignifuge (13) est une solution durcie d'un silicate alcalin.

3. Elément ignifuge selon l'une des revendications 1 ou 2,
**caractérisé**
**en ce que** le revêtement protecteur (12) possède une épaisseur de 20 nm à 100 nm, de préférence une épaisseur de 40 nm à 50 nm.

4. Elément ignifuge selon l'une des revendications 1 à 3,
**caractérisé**
**en ce que** le revêtement protecteur (12) présente une saturation en oxygène ou un excédent en oxygène et/ou une saturation en azote ou un excédent en azote.

5. Elément ignifuge selon l'une des revendications 1 à 4,
**caractérisé**
**en ce que** l'élément support (11) est une vitre en verre flotté, dont la première surface (15) fut en contact avec un bain d'étain lors de la fabrication, et au moins la surface (14) de la vitre en verre flotté, opposée à la première surface (15), est enduite du revêtement protecteur (12).

6. Procédé de fabrication d'un élément ignifuge (10) avec au moins un élément support transparent (11) et un agent ignifuge (13) qui est disposé sur au moins une surface de l'élément support, dans lequel la surface (14) de l'élément support tournée vers l'agent ignifuge (13) est enduite d'un revêtement protecteur (12) réduisant une turbidité,
**caractérisé**
**en ce que** le revêtement protecteur (12) contient exclusivement au moins l'un des matériaux suivants : oxyde de silicium, oxyde d'hafnium, oxyde de vanadium, oxyde de niobium, nitrure de zinc, nitrure d'étain, nitrure d'hafnium, nitrure de vanadium, nitrure de niobium.

7. Procédé selon la revendication 6,
**caractérisé**
**en ce que** le revêtement protecteur (12) est déposé à partir d'une substance de départ métallique ou céramique par un procédé de dépôt physique, en particulier un procédé de pulvérisation.

8. Procédé selon la revendication 7,
**caractérisé**
**en ce que** l'oxygène et/ou l'azote est utilisé comme gaz réactif et la proportion de gaz réactif provoque une saturation ou un excédent en oxygène ou en azote dans le revêtement protecteur.
